# EUROPEAN PATENT APPLICATION

(11) **EP 4 848 422 A1**
(43) Date of publication of application: **02.12.2026**
(21) Application number: 26164225.0
(22) Date of filing: 12.03.2026
(51) Int. Cl.: H01M 50/152, H01M 50/157, H01M 50/164, H01M 50/502, H01M 50/516, H01M 50/159, H01M 50/522

(54) **RECHARGEABLE BATTERY, BATTERY MODULE, AND ELECTRIC DEVICE**

(30) Priority: 29.05.2025 KR 20250070772
(71) Applicant: SAMSUNG SDI CO., LTD., Yongin-si, Gyeonggi-do 17084 (KR)
(72) Inventor: MOON, Sanghyup, 17084 Yongin-si, Gyeonggi-do (KR); PARK, Keunwoo, 17084 Yongin-si, Gyeonggi-do (KR); KIM, Dongwoo, 17084 Yongin-si, Gyeonggi-do (KR); KIM, Eunji, 17084 Yongin-si, Gyeonggi-do (KR)
(74) Representative: Bardehle Pagenberg Partnerschaft mbB Patentanwälte Rechtsanwälte

(57) **Abstract**

A rechargeable battery includes a case having an internal space. A cap assembly is coupled to the case and includes an upper cap. An electrode assembly is positioned in the internal space of the case. The upper cap includes a base layer and a nickel-phosphorus alloy plating layer on the base layer. The nickel-phosphorus alloy plating layer has a phosphorus content of 6 wt% to 14 wt%.

## Description

### BACKGROUND

### (a) Technical Field

The present disclosure relates to a rechargeable battery, a battery module, and an electric device.

### (b) Description of the Related Art

Unlike primary batteries that are not designed to be (re)charged, secondary or rechargeable batteries are designed to be discharged and recharged. Small-capacity rechargeable batteries can be used in small portable electronic devices, such as mobile phones, laptop computers, and camcorders. Large-capacity rechargeable batteries can be used as power sources for driving motors in electric scooters, hybrid vehicles, and electric vehicles.

Rechargeable batteries can be made for example of a single cell, as used in small electronic devices, or can be made for example of a module in which a plurality of unit batteries are electrically connected to each other, as for example used in motor drives. A battery module may have a plurality of rechargeable battery cells which may include a bus bar electrically connecting the battery cells to each other and allowing current generated from the battery cells to flow to outside of the battery module. Efforts have been continuously made to improve connection between the bus bar and the battery cells in a battery module.

The information disclosed in this background art section is only for better understanding of the background of the present disclosure and may include information that does not constitute prior art.

### SUMMARY

Aspects of the present disclosure are directed to improving the connection between a bus bar and a rechargeable battery. The present disclosure also provides a battery module including the rechargeable battery and an electrical device including the battery module.

However, the technical objects to be solved by the present disclosure are not limited to the above-described problems, and other problems not mentioned herein, and aspects and features of the present disclosure that would address such problems, can be clearly understood by a person of an ordinary skill in the art from the description of the disclosure described below.

A rechargeable battery according to embodiments may include a case having an internal space, a cap assembly coupled to the case, the cap assembly optionally comprising an upper cap, and an electrode assembly positioned in the internal space, the upper cap may include a base layer, and a nickel-phosphorus alloy plating layer on the base layer, and a phosphorus content in the nickel-phosphorus alloy plating layer may be 6 wt% to 14 wt%.

According to embodiments of the present disclosure, a phosphorus content in the nickel-phosphorus alloy plating layer may be 8 wt% to 12 wt%.

According to embodiments of the present disclosure, the hardness of the nickel-phosphorus alloy plating layer may be 400 to 450.

According to embodiments of the present disclosure, the base layer may include steel.

According to embodiments of the present disclosure, the nickel-phosphorus alloy plating layer may be formed by electroless plating.

According to embodiments of the present disclosure, the nickel-phosphorus alloy plating layer may contain nickel with an amorphous structure.

According to embodiments of the present disclosure, the rechargeable battery may be cylindrical.

A battery module according to embodiments may include a plurality of rechargeable batteries, and a bus bar electrically connected to each of the rechargeable batteries, each of the rechargeable batteries may include a cap assembly connected to the bus bar, each of the cap assemblies may include an upper cap connected to the bus bar, the upper cap may include a base layer and a nickel-phosphorus alloy plating layer on the base layer, and each of the nickel-phosphorus alloy plating layers may have a phosphorus content of 6 wt% to 14 wt%.

According to embodiments of the present disclosure, the bus bar may include copper-tin alloy.

According to embodiments of the present disclosure, the bus bar and the cap assemblies may be connected by resistance welding.

According to embodiments of the present disclosure, an electrical device according to an embodiment may include the battery module.

According to embodiments of the present disclosure, the welding between a bus bar and an upper cap can be improved. Thus, the bonding ability of the busbar and the rechargeable battery can be improved.

### BRIEF DESCRIPTION OF THE DRAWINGS

The drawings illustrate preferred embodiments of the present disclosure and serve to facilitate better understanding of the technical idea of the present disclosure together with the detailed description of the disclosure herein. The present disclosure should not be interpreted as being limited to the embodiments depicted in the drawings.
FIG. 1 is a perspective view of an example of a rechargeable battery according to an embodiment of the present disclosure.
FIG. 2 shows a cross-section of the rechargeable battery of FIG. 1.
FIG. 3 is a perspective view of an example of a battery module according to an embodiment of the present disclosure.
FIG. 4A shows an example of an XRD (X-ray Diffraction) analysis result of a nickel-plating layer formed by electrolytic plating.
FIG. 4B is a drawing showing an example of an XRD analysis result of a nickel-phosphorus alloy plating layer formed by electroless plating.
FIG. 5 illustrates the welding strengths of samples having nickel-phosphorus alloy plating layers of varying thickness.
FIG. 6 shows an example of the calculation of a process capability index.
FIG. 7A, 7B, and 7C illustrate examples of electrical devices with which battery modules according to the present embodiment can be used.

### DETAILED DESCRIPTION OF THE EMBODIMENTS

Hereinafter, with reference to accompanying drawings, various embodiments of the present disclosure will be described in detail so that a person of an ordinary skill may implement the present disclosure. The present disclosure may be implemented in many different forms and is not limited to the embodiments described herein.

To clearly explain the present disclosure, parts that are not relevant to the description are omitted, and identical or similar components are assigned the same reference numerals throughout the specification.

The size and thickness of each component shown in the drawings are shown arbitrarily for convenience, and the present disclosure is not necessarily limited to what is shown. In the drawings, the thickness of layers, films, panels, regions, etc., may be exaggerated for clarity. And thicknesses of some layers and regions may be exaggerated.

It will be understood that when an element such as a layer, film, region, or substrate is referred to as being "on" another element, it can be directly on the other element or intervening elements may also be present. In contrast, when an element is referred to as being "directly on" another element, there are no intervening elements present. In addition, being "on" or "above" a reference element means being positioned on or below the reference element, and does not necessarily mean being positioned "above" or "on" in a direction opposite to gravity.

Unless explicitly described to the contrary, the word "comprise", and variations such as "comprises" or "comprising", will be understood to imply the inclusion of stated elements but not the exclusion of any other elements.

In addition, throughout the specification, when referring to "a plane view", it means that the target portion is viewed from above, and when referring to "a cross-section view", it means that a cross section of the target portion cut vertically is viewed from a side.

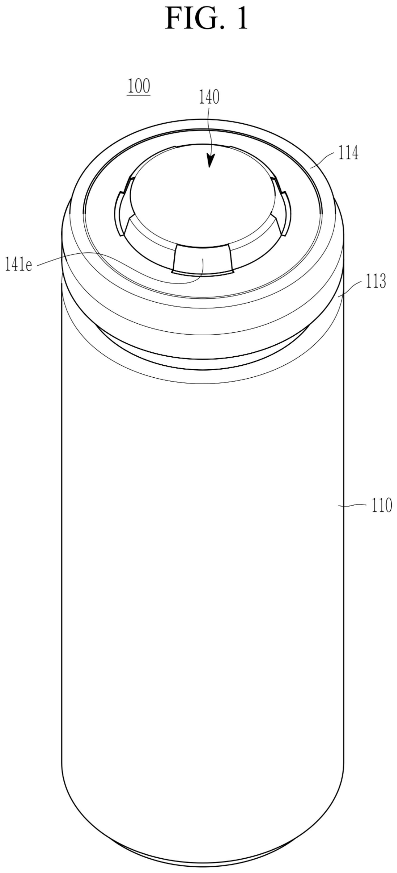

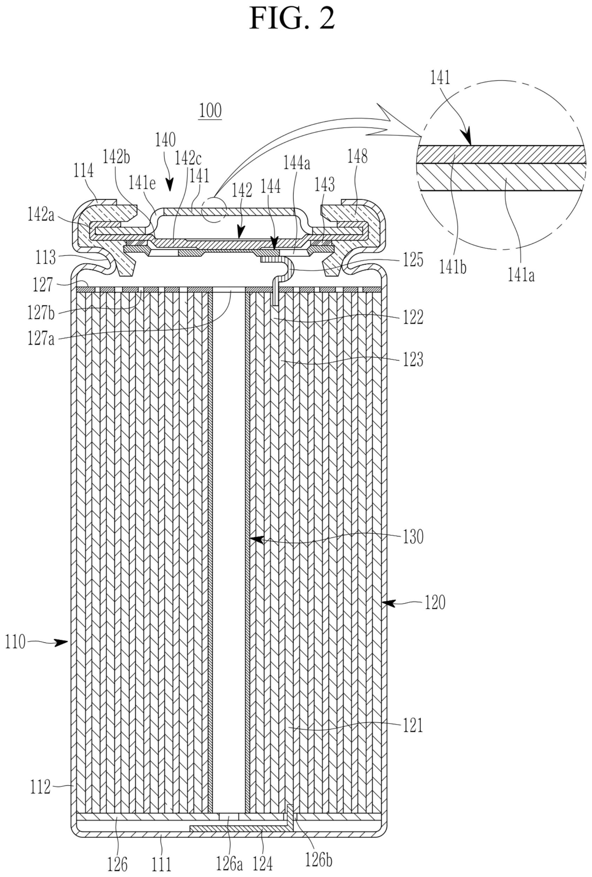

FIG. 1 is a perspective view illustrating an example of a rechargeable battery according to an embodiment of the present disclosure. FIG. 2 illustrates a cross-section of the rechargeable battery of FIG. 1.

Referring to FIG. 1 and FIG. 2, a rechargeable battery 100 includes an electrode assembly 120, a case 110 having an internal space in which the electrode assembly 120 and an electrolyte are accommodated, and a cap assembly 140 coupled to the case 110 to cover an opening and seal the case 110.

The case 110 accommodates the electrode assembly 120 and electrolyte inside, and forms an external shape of the rechargeable battery 100 together with the cap assembly 140. The case 110 may include a bottom portion 111 and a body portion 112 extending upward from the bottom portion 111 by a certain length. The bottom portion 111 may be circular, and the body portion 112 may be cylindrical. That is, the rechargeable battery 100 according to the present embodiment may be cylindrical. However, the present disclosure is not limited to cylindrical-shaped batteries.

A beading part 113 positioned on the body portion 112 is deformed toward the inside of the case 110. A crimping part 114 may be positioned at the end of an opening of the body portion 112, with the crimping part 114 being bent toward the inside of the case 110. The beading part 113 may suppress movement of the electrode assembly 120 inside the case 110 and facilitate the settling of the gasket 148 and the cap assembly 140. The crimping part 114 may press an edge of the cap assembly 140 via the gasket 148 to thereby securely fix the cap assembly 140. The case 110 may be made of, for example, nickel-plated steel.

The electrode assembly 120 may include a first electrode 121, a second electrode 122, and a separator 123 between the first electrode 121 and the second electrode 122. The electrode assembly 120 may be wound in a jelly-roll shape.

The first electrode 121 includes a first base and a first active material layer on the first base. A first electrode tab 124 may extend outward from a first uncoated region of the first base where the first active material layer is not provided, and the first electrode 121 may be electrically connected to the case 110. To this end, the first electrode tab 124 may be electrically connected to a separate current collecting member, and the current collecting member may be directly connected to the bottom portion 111 or connected to the bottom portion 111 through a separate current collector. In other embodiments, the first electrode tab 124 may be directly connected to the bottom portion 111 without a separate current collecting member.

The second electrode 122 includes a second base and a second active material layer on the second base. A second electrode tab 125 may extend outward from a second uncoated region of the second base where the second active material layer is not provided, and the second electrode tab 125 may be electrically connected to the cap assembly 140. For this purpose, the second electrode tab 125 may be electrically connected to a separate current collecting member, and the current collecting member may be directly connected to the cap assembly 140 or connected to the cap assembly 140 through a separate current collector. In other embodiments, the second electrode tab 125 may be directly connected to the cap assembly 140 without a separate current collecting member.

The first electrode tab 124 and the second electrode tab 125 may extend in opposite directions.

The first electrode 121 may function as a negative electrode. As such, the first base may be made of, for example, copper foil or nickel foil, and the first active material layer may contain, for example, graphite or carbon. The second electrode 122 may function as a positive electrode. As such, the second base may be made of, for example, aluminum foil, and the second active material layer may contain, for example, a transition metal oxide. Accordingly, the case 110 electrically connected to first electrode tab 124 may function as a negative electrode, and the cap assembly 140 connected to second electrode tab 125 may function as a positive electrode.

The separator 123 functions to prevent a short circuit between the first electrode 121 and the second electrode 122 while allowing the movement of lithium ions. The separator 123 may include, for example, polyethylene film, polypropylene film or polyethylene-polypropylene film.

The cap assembly 140 is coupled to the case 110 and seals the opening of the case 110. The cap assembly 140 may include an upper cap141, a safety vent 142, a lower cap 144, a first insulating member 143, and a gasket 148. But the present disclosure is not limited thereto, it may include various other arrangements and configurations.

The upper cap 141 may be positioned at the uppermost side of cap assembly 140. The upper cap 141 may include a protruded portion convexly exposed upward for connection to an external circuit, and an outlet 141e for discharging gas may be positioned around the protruded portion. The outlet 141e may discharge gas from inside the case 110 to the outside of the case 110 when a certain level of pressure is reached inside the case 110. The upper cap 141 may be made of, for example, steel plated with a nickel-phosphorus alloy. That is, the upper cap 141 may include a base layer 141a made of steel. A nickel-phosphorus alloy plating layer 141b formed from a nickel-phosphorus alloy may be provided on the base layer 141a. The nickel-phosphorus alloy plating layer 141b may have a thickness ranging from 2 µm to 7 µm. The phosphorus content may be 6 wt% to 14 wt% of the nickel phosphorus alloy plating layer 114b. More preferably, the phosphorus content may be 8 wt% to 12 wt% in the nickel-phosphorus alloy plating layer 141b. Here, the phosphorus content is based on the total weight of the nickel-phosphorus alloy plating layer 141b. The nickel-phosphorus alloy plating layer 141b can be formed by electroless plating.

A safety vent 142 may be positioned under the upper cap 141. The safety vent 142 may include a vent contact portion 142a contacting the upper cap 141, a vent slope portion 142b inclined downward from the vent contact portion 142a, and a vent bottom portion 142c extended from the vent slope portion 142b and arranged parallel to the vent contact portion 142a. The safety vent 142 may further include a vent protrusion portion protruding in a direction from the vent bottom portion 142c and at least one notch positioned around the vent protrusion portion. The vent contact portion 142a may be bent multiple times to contact the lower surface, side surface, and upper surface of the upper cap 141, respectively. And the vent bottom portion 142c may be contacted or connected to the lower cap 144.

The lower cap 144 may be positioned under the safety vent 142. The lower cap 144 may include a plurality of openings 144a and may be electrically connected to the second electrode tab 125. As such, the upper cap 141, the safety vent 142 and the lower cap 144 may be electrically connected to the second electrode 122. The lower cap 144 may be made of, for example, aluminum or aluminum alloy.

The first insulating member 143 is positioned between the safety vent 142 and the lower cap 144 and may insulate the vent contact portion 142a from the lower cap 144.

When gas is generated inside the case 110 due to, for example, overcharging or abnormal operation of the rechargeable battery 100, the gas pressure deforms the safety vent 142 through the opening 144a of the lower cap 144. The safety vent 142 is thereby reversed in the upper direction and electrically isolated from the lower cap 144. In succession, the safety vent 142 is opened and the gas is released to outside through the outlet 141e of the upper cap 141. Thus, an explosion of the rechargeable battery 100 can be prevented.

The gasket 148 may be positioned inside the beading part 113 and crimping part 114 to insulate the upper cap 141, the safety vent 142, and the lower cap 144 from the body portion 112 of the case 110.

The rechargeable battery 100 may further include a second insulating member 126 positioned between the electrode assembly 120 and the bottom portion 111 of the case 110, a third insulating member 127 positioned between the electrode assembly 120 and the cap assembly 140, and a center pin 130 positioned at the center of the electrode assembly 120.

The second insulating member 126 insulates the electrode assembly 120 from the bottom portion 111, and the second insulating member 126 may include a first hole 126a positioned at the center and a second hole 126b positioned outside the center. The first hole 126a may allow gas to move quickly upwards through the center pin 130 when a large amount of gas is generated due to a malfunction in the rechargeable battery 100. The first electrode tab 124 may extend through the second hole 126b and be welded to the bottom portion 111. The first electrode tab 124 and the bottom portion 111 may be welded at a position corresponding to the first hole 126aLaser welding or resistance welding may be used.

The third insulating member 127 insulates the electrode assembly 120 from the cap assembly 140 and may include a third hole 127a positioned at the center and a plurality of fourth holes 127b positioned outside the center. The third hole 127a may allow gas to quickly move to the cap assembly 140 when a large amount of gas is generated due to malfunction of the rechargeable battery 100. The second electrode tab 125 extends through one of the fourth holes 127b and is welded to the cap assembly 140. The other fourth holes 127b may allow the electrolyte to quickly flow into the electrode assembly 120 during the electrolyte injection process.

The center pin 130 has a hollow circular pipe shape, suppresses deformation of the electrode assembly 120 during charging and discharging the rechargeable battery 100, and functions as a passage for gas generated inside the rechargeable battery 100. In some embodiments, the center pin 130 may be omitted.

The first hole 126a of the second insulation member 126, the fourth hole 127b of the third insulation member 127, and the center pin 130 may be aligned with each other. The diameter of the first hole 126a of the second insulating member 126 and the diameter of the third hole 127a of the third insulating member 127 may be smaller than the diameter of the center pin 130. Accordingly, the center pin 130 is prevented from electrically contacting the bottom portion 111 of the case 110 or the cap assembly 140 even when an external impact is applied to the rechargeable battery 100.

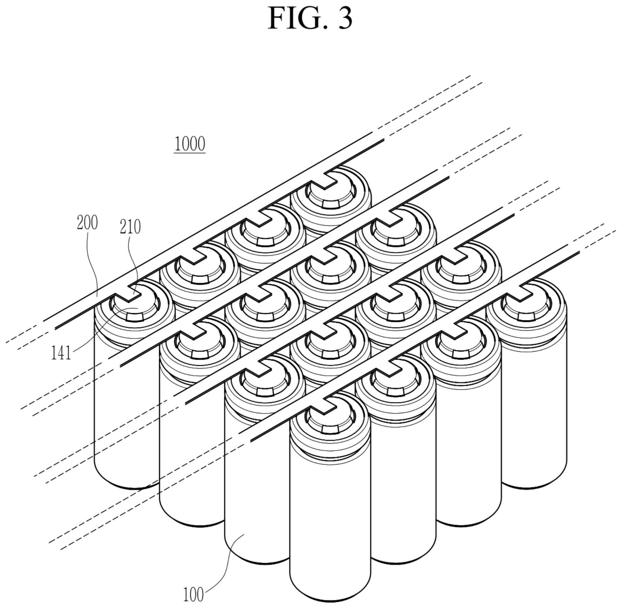

FIG. 3 is a perspective view of an example of a battery module according to an embodiment of the present disclosure.

Referring to FIG. 3, a battery module 1000 according to the present embodiment includes a plurality of rechargeable batteries 100, bus bar wires 200, and bus bars 210. The rechargeable batteries 100 in the battery module 1000 may be the same as the rechargeable battery 100 depicted in FIGS. 1 and 2.

A plurality of rechargeable batteries 100 may be arranged in a plurality of rows and a plurality of columns, bus bar wire(s) 200 may be extended along the rows or columns of the rechargeable batteries 100, and bus bar(s) 210 may extend from the bus bar wire 200 to be electrically connected to the upper cap 141 of each of the rechargeable batteries 100. The bus bar 210 and upper caps 141 may be electrically connected by welding. For example, the bus bar 210 and the upper cap 141 may be connected by resistance welding. The bus bar 210 may include a copper-tin alloy.

In cylindrical rechargeable batteries, nickel plating is often applied to the upper cap by electrolytic plating to improve the mechanical and chemical characteristics of the upper cap.

Table 1 below shows the melting points of copper, copper-tin alloy, nickel, and nickel-phosphorus alloy. Because the melting point of nickel is 1452 °C, and the melting point of copper-tin alloy is 875 °C to 994 °C, when the upper cap 141 is plated with nickel by electrolytic plating, a resistance heat of 1400 °C or higher is required for resistance welding the bus bar 210 and upper cap 141. But, since the melting point of nickel-phosphorus alloy is 880 °C to 1200 °C and the upper cap 141 of embodiments of the present disclosure may be plated with nickel-phosphorus alloy by electroless plating, a fused connection is possible without additional resistance heat when resistance welding the bus bar 210 and the upper cap 141. Thus, it can be seen that electroless plating with nickel-phosphorus alloy is advantageous for resistance welding in embodiments of the present disclosure.

**Table 1**

| Melting Point of Metals | |
|---|---|
| Metal | Melting Point (°C) |
| Copper | 1083 |
| Copper-Tin Alloy | 875 to 994 |
| Nickel | 1452 |
| Nickel-Phosphorus Alloy | 880 to 1200 |

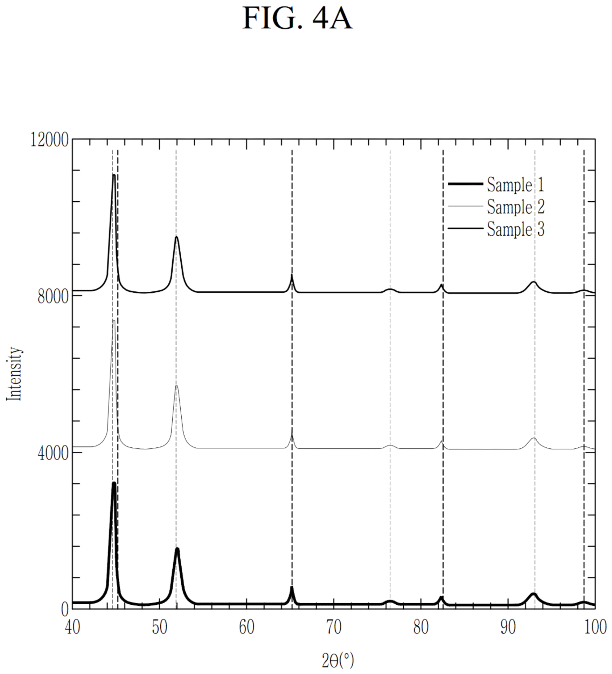

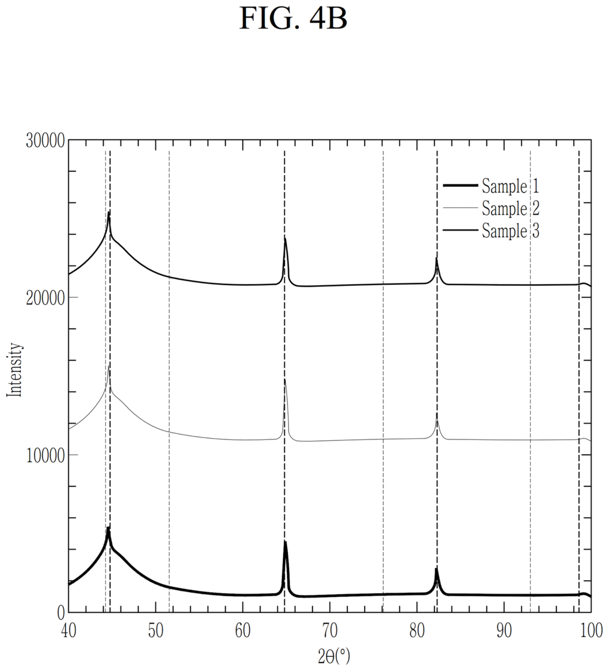

Electrolytic plating and electroless plating can be confirmed by the crystal structure of nickel contained in the plating layer of the upper cap 141. FIG. 4A shows an example of an XRD (X-ray Diffraction) analysis result of a nickel-plating layer formed by electrolytic plating. FIG. 4B shows an example of an XRD analysis result of a nickel-phosphorus alloy plating layer formed by electroless plating. The results of XRD analysis shown in FIGS. 4A and 4B are for three samples. Each sample is made of SPCE (KS D3512) and has a circular shape with a diameter of 18.5 mm and a thickness of 0.6 mm. Each sample was subjected to electrolytic degreasing in a solution mixed with sodium gluconate (C₆H₁₁O₇Na), sodium cyanide (NaCN), sodium hydroxide (NaOH), and distilled water at 60°C for 30 minutes. The plating of each sample was carried out at pH 4.5-4.7, 350 RPM, and 90°C for 30 minutes. For the plating of each sample, nickel sulfate (NiSO₄ + 6H₂O) was used as the metal salt, sodium hypophosphite (NaH₂PO₂) as the reducing agent, ammonia and carboxylic acid as the complexing agents, sodium acetate and boric acid as the pH adjusters, and sulfur compounds as the stabilizers.

Referring to FIG. 4A and FIG. 4B, it can be seen that nickel was detected in the plating layer. As shown in FIG. 4A, sharp peaks corresponding to nickel crystalline structure can be seen. As shown in FIG. 4B gentle peaks can be seen that correspond to nickel with an amorphous structure. In other words, it can be seen that a nickel-phosphorus alloy plating layer formed by electroless plating contains nickel with an amorphous structure.

Because the bus bar 210 may include a copper-tin alloy and the upper cap 141 may include steel electroless plated with a nickel-phosphorus alloy, resistance welding of the busbar 210 and the upper cap 141 is a junction of dissimilar metals, which may result in deterioration of the welding strength. In the present disclosure, by controlling the phosphorus content in the nickel-phosphorus alloy plating layer, the welding strength can be improved and the electrical conductivity can be enhanced when resistance welding the bus bar 210 and the upper cap 141. In embodiments of the present disclosure, the phosphorus content in the nickel-phosphorus alloy plating layer is 6 wt% to 14 wt%.

Table 2 below shows problems resulting from the phosphorus content in the nickel-phosphorus alloy plating layer when welding the upper cap 141 and the bus bar 210. Here, the hardness of the nickel-phosphorus alloy plating layer was measured using the Vickers hardness test.

Referring to Table 2, it can be seen that when the phosphorus content in the nickel-phosphorus alloy plating layer is less than 6 wt%, the melting point of the nickel-phosphorus alloy plating layer increases and the hardness is 350 to 400, which results in weldability deterioration. It can also be seen that when the phosphorus content in the nickel-phosphorus alloy plating layer exceeds 14 wt%, the hardness of the nickel-phosphorus alloy plating layer increases to 450 or more, which causes the electrical conductivity to decrease. In contrast, it can be seen that such problems do not occur when the phosphorus content in the nickel-phosphorus alloy plating layer is 6 wt% to 14 wt%, as in embodiments of the present disclosure.

**Table 2**

| Problems based on the phosphorus content in the nickel-phosphorus alloy plating layer when welding upper cap 141 and bus bar 210 | | | |
|---|---|---|---|
| Phosphorus Content in the Nickel-Phosphorus Alloy | Melting Point (°C) | Hardness (HV) | Problem |
| 1 wt% to 5 wt% | about 1100 to 1200 | 350 to 400 | weldability deterioration |
| 6 wt% to 14 wt% | about 950 to 1100 | 400 to 450 | - |
| 8 wt% to 12 wt% | about 900 to 1000 | 410 to 430 | - |
| more than 14 wt% | about 880 to 950 | 450 or more | electrical conductivity deterioration |

In embodiments of the present disclosure, when resistance welding the bus bar 210 and the upper cap 141 the nickel-phosphorus alloy plating layer is formed by electroless plating. Thus, the weldability is excellent and uniform welding strength can be secured regardless of the thickness of the nickel-phosphorus alloy plating layer.

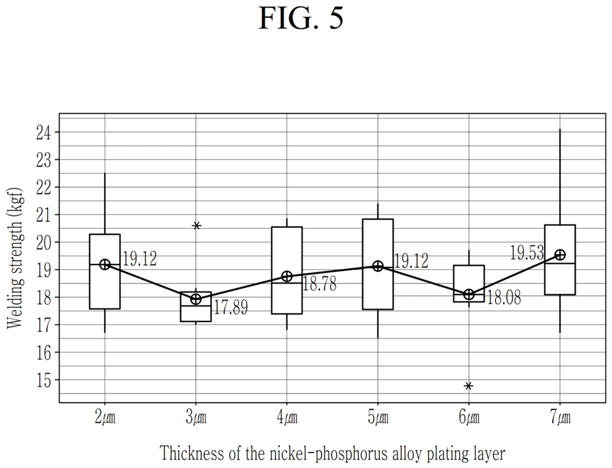

Table 3 below shows the welding strengths of samples having various thicknesses of a nickel-phosphorus alloy plating layer. FIG. 5 is a graph of the data shown in Table 3. In Table 3, each sample was made by resistance welding a specimen containing a copper-tin alloy and a specimen containing steel electroless-plated with a nickel-phosphorus alloy. The welding strength was measured by changing the thickness of the nickel-phosphorus alloy plating layer (2 µm, 3 µm, 4 µm, 5 µm, 6 µm, 7 µm). Here, if the welding strength exceeds 13 kgf, the weldability is considered excellent.

Referring to Table 3 and FIG. 5, as the thickness of the nickel-alloy plating layer changed, the welding strength was: 17.9 kgf to 20.6 kgf for sample 4; 17.0 kgf to 20.6 kgf for sample 5; 17.3 kgf to 19.6 kgf for sample 6; 17.2 kgf to 20.8 kgf for sample 7; 14.7 kgf to 20.4 kgf for sample 8; 16.7 kgf to 22.5 kgf for sample 9; 16.8 kgf to 21.4 kgf for sample 10; 17.8 kgf to 24.1 kgf for sample 11; 17.4 kgf to 21.4 kgf for sample 12; and 16.5 kgf to 20.5 kgf for sample 13. Thus, the welding strength for each thickness of the nickel-phosphorus alloy plating layer of each sample exceeded 13 kgf, which indicates that the weldability is excellent regardless of the change in the thickness of the nickel-phosphorus alloy plating layer when resistance welding a specimen containing a copper-tin alloy and a specimen containing steel electroless-plated with a nickel-phosphorus alloy.

Further, the average welding strength for each thickness of the nickel-phosphorus alloy plating layer was: 19.12 kgf for 2 µm; 17.89 kgf for 3 µm; 18.78 kgf for 4 µm; 19.12 kgf for 5 µm; 18.08 kgf for 6 µm; and 19.53 kgf for 7 µm. Thus, according to the present disclosure when resistance welding a specimen containing a copper-tin alloy and a specimen containing steel electroless-plated with a nickel-phosphorus alloy, the welding strength is almost uniform regardless of the thickness change.

**Table 3**

| Welding Strength (kgf) Samples with Nickel-Phosphorus Alloy Plating Layer | | | | | | |
|---|---|---|---|---|---|---|
| Thickness | 2µm | 3µm | 4µm | 5µm | 6µm | 7µm |
| Sample 4 | 20.1 | 17.9 | 19.8 | 20.6 | 18.3 | 19.3 |
| Sample 5 | 20.6 | 17.0 | 18.4 | 17.2 | 17.6 | 20.2 |
| Sample 6 | 19.6 | 18.3 | 17.3 | 19.4 | 18.2 | 18.3 |
| Sample 7 | 18.7 | 17.2 | 20.8 | 18.8 | 17.9 | 17.5 |
| Sample 8 | 16.7 | 17.5 | 18.6 | 20.4 | 14.7 | 20.3 |
| Sample 9 | 22.5 | 20.6 | 17.6 | 17.7 | 19.7 | 16.7 |
| Sample 10 | 17.2 | 17.1 | 16.8 | 21.4 | 18.0 | 21.4 |
| Sample 11 | 20.1 | 18.1 | 20.6 | 17.8 | 19.1 | 24.1 |
| Sample 12 | 18.0 | 18.1 | 17.4 | 21.4 | 18.0 | 18.3 |
| Sample 13 | 17.7 | 17.1 | 20.5 | 16.5 | 19.3 | 19.2 |

When considering process capability, it can be seen that the nickel-phosphorus alloy plating layer according to the present disclosure has excellent welding performance in resistance welding. The process capability can be measured by calculating the process capability index (Cp or Cpk, hereinafter, referred to as Cp/Cpk). The process capability index is a method for measuring process capability by comparing the level required to improve the process with the work results. A higher value of the process capability index means a lower product defect rate and more stable production. A lower value of the process capability index means there are many defects beyond the upper or lower limits of the required tolerance.

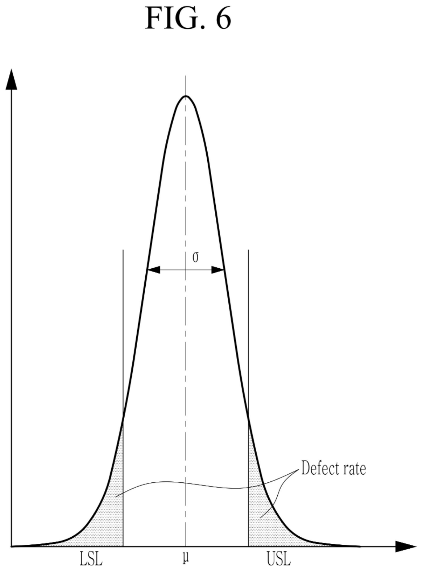

FIG. 6 shows an example of a process capability index. Equation 1 below is used for calculating the Cp value, and Equation 2 below is used for calculating the Cpk value.

In FIG. 6 and Equations 1 and 2, USL (Upper Spec Limit) means the upper tolerance limit, LSL (Lower Spec Limit) means the lower tolerance limit, µ means the average value, and σ means the standard deviation. $Cp = \frac{USL - LSL}{6 σ}$ Equation 1 $Cpk = min \left(\frac{USL - μ}{3 σ}, \frac{μ - LSL}{3 σ}\right)$ Equation 2

Table 4 below shows reference for assessment of process capability according to the value of Cp/Cpk, and Table 5 shows the judgment of the process capability according to the phosphorus content of the nickel-phosphorus alloy plating layer when welding an upper cap 141 and bus bar 210.

Referring to Table 4 and Table 5, it can be seen that the process capability index is 0.56 and Grade 4 when the phosphorus content in the nickel-phosphorus alloy plating layer was less than 6 wt%. In these cases, the process capability is assessed to be very insufficient, the process deviation is large, and the spec (specification) is assessed to be out of the limit. When the phosphorus content in the nickel-phosphorus alloy plating layer exceeded 14 wt%, it can be seen that the process capability index is 0.32 and Grade 4. In these cases, the process capability is assessed to be very insufficient, the process deviation is large, and the spec (specification) is assessed to be out of the limit. When the phosphorus content in the nickel-phosphorus alloy plating layer was 6 wt% to 14 wt%, as in embodiments of the present disclosure, it can be seen that the process capability index is 1.11 and Grade 2. In these cases, the process capability was assessed to be satisfactory, the process deviation is small, and all products were assessed to be within the specification limit. In particular, when the phosphorus content in the nickel-alloy plating layer was 8 wt% to 12 wt%, it can be seen that the process capability index is 2.13, which is considered as Grade Special. In these cases, it can be seen that the process capability is assessed to be very satisfactory and the process deviation is assessed to be in a very good condition. That is, the welding performance is excellent when the phosphorus content in the nickel-phosphorus alloy plating layer is 6 wt% to 14 wt%, as in embodiments of the present disclosure. Therefore, bonding between the bus bar 210 and the rechargeable battery 100 can be improved.

**Table 4**

| Reference for Assessment of Process Capability | | |
|---|---|---|
| Cp/Cpk | Grade | Assessment |
| Cp/Cpk > 1.68 | Special | Very Satisfactory |
| 1.34 < Cp/Cpk ≤ 1.67 | Grade 1 | Sufficient |
| 1.01 < Cp/Cpk ≤ 1.33 | Grade 2 | Satisfactory |
| 0.68 < Cp/Cpk ≤ 1.00 | Grade 3 | Insufficient |
| 0.00 < Cp/Cpk ≤ 0.67 | Grade 4 | Very Insuffuicient |

**Table 5**

| Assessment of the Process Capability according to the Phosphorus Content in the Nickel-Phosphorus Alloy Plating Layer when Welding Upper Cap 141 and Bus bar 210 | | | |
|---|---|---|---|
| Phosphorus Content in the Nickel-Phosphorus Alloy Plating Layer | Process Capability Index (Cp / Cpk) | Process Capability Assessment | Assessment |
| 1 wt% to 5 wt% | 0.56 | Very Insuffuicient | Large process deviation - out-of specification |
| 6 wt% to 14 wt% | 1.11 | Satisfactory | Small process deviation - within the limit of specification |
| 8 wt% to 12 wt% | 2.13 | Very Satisfactory | Very good process deviation |
| More than 14 wt% | 0.32 | Very Insuffuicient | Large process deviation - out-of specification |

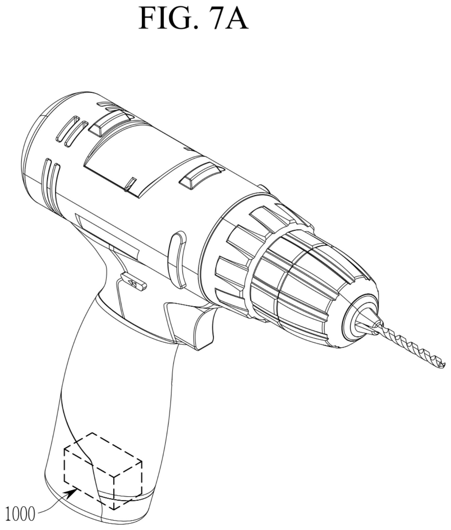

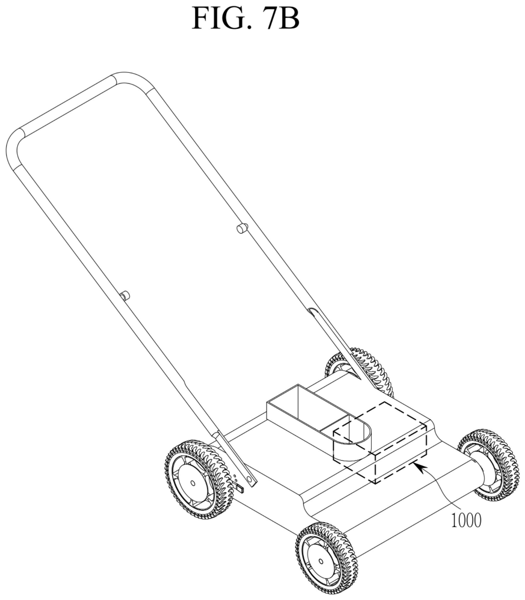

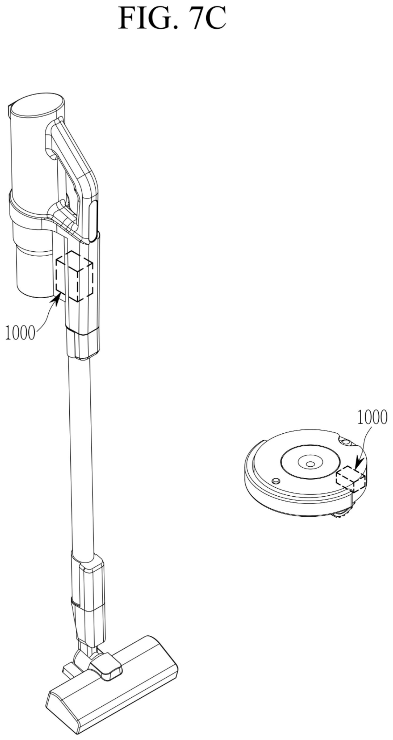

FIG. 7A, 7B and 7C illustrate examples of electrical devices with which a battery module according to the present disclosure is used.

The battery module 1000 according to the present disclosure may be used in an electric device, such as a power device, which uses a motor and a battery cell to increase efficiency. Such power devices include electrical tools, gardening tools, and cleaning devices.

FIG. 7A illustrates an electrical tool including a battery module 1000 according to the present disclosure. FIG. 7B illustrates a gardening tool including a battery module 1000 according to the present disclosure. FIG. 7C illustrates cleaning devices including a battery module 1000 according to the present disclosure. The electrical tool may be light but powerful enough to drill through concrete walls and may be able to work for long time in areas where charging is difficult. The gardening tools may include lawn mowers, grass trimmer, and chainsaws. The cleaning device may include cordless cleaners and robot cleaners.

Although the embodiments of the present disclosure have been described in detail above, the scope of the present disclosure is not limited to the expressly described embodiments. Various modifications and improvements can be made by those skilled in the art using the basic concept of the present disclosure.

The present disclosure additionally includes the following numbered embodiments:
1. A rechargeable battery comprising: a cap assembly; and an electrode assembly positioned in the internal space, wherein, the cap assembly comprises a cap-up on the electrode assembly; the cap-up comprises: a base layer; and a nickel-phosphorus alloy plating layer on the base layer; and a phosphorus content in the nickel-phosphorus alloy plating layer is 6 wt% to 14 wt%.
2. The rechargeable battery according to embodiment 1, wherein the phosphorus content in the nickel-phosphorus alloy plating layer is 8 wt% to 12 wt%.
3. The rechargeable battery according to embodiment 1 or 2, wherein a hardness of the nickel-phosphorus alloy plating layer is 400 to 450.
4. The rechargeable battery according to one of embodiments 1 to 3, wherein the base layer comprises steel.
5. The rechargeable battery according to one of embodiments 1 to 4, wherein the nickel-phosphorus alloy plating layer is formed by electroless plating.
6. The rechargeable battery according to one of embodiments 1 to 5, wherein the nickel-phosphorus alloy plating layer comprises nickel of an amorphous structure.
7. The rechargeable battery according to one of embodiments 1 to 6, wherein the rechargeable battery is cylindrical.
8. A battery module comprising: a plurality of rechargeable batteries; and a bus bar electrically connected to each of the plurality of rechargeable batteries, wherein: each of the plurality of rechargeable batteries comprises a cap assembly connected to the bus bar; the cap assembly comprises a cap-up connected to the bus bar; the cap-up comprises: a base layer; and a nickel-phosphorus alloy plating layer on the base layer; and a phosphorus content in the nickel-phosphorus alloy plating layer is 6 wt% to 14 wt%.
9. The battery module according to embodiment 8, wherein the phosphorus content in the nickel-phosphorus alloy plating layer is 8 wt% to 12 wt%.
10. The battery module according to embodiment 8 or 9, wherein a hardness of the nickel-phosphorus alloy plating layer is 400 to 450.
11. The battery module according to one of embodiments 8 to 10, wherein the bus bar comprises copper-tin alloy.
12. The battery module according to one of embodiments 8 to 11, wherein the base layer comprises steel.
13. The battery module according to one of embodiments 8 to 12, wherein the nickel-phosphorus alloy plating layer is formed by electroless plating.
14. The battery module according to one of embodiments 8 to 13, wherein the nickel-phosphorus alloy plating layer comprises nickel of an amorphous structure.
15. The battery module according to one of embodiments 8 to 14, wherein the busbar and the cap assembly are connected by resistance welding.
16. The battery module according to one of embodiments 8 to 15, wherein the rechargeable battery comprises: a case having an internal space and connected to the cap assembly; and an electrode assembly positioned in the internal space, and; the cap plate further comprises a cap-down electrically connected to the electrode assembly.
17. The battery module according to one of embodiments 8 to 16, wherein the rechargeable battery is cylindrical.
18. An electric device comprising the battery module according to one of embodiments 8 to 17.

**<Description of symbols>**

| | | | |
|---|---|---|---|
| 100: | rechargeable battery | 110: | case |
| 111: | bottom portion | 112: | body portion |
| 113: | beading part | 114: | crimping part |
| 120: | electrode assembly | 121: | first electrode |
| 122: | second electrode | 123: | separator |
| 124: | first electrode tab | 125: | second electrode tab |
| 126: | second insulating member | 127: | third insulating member |
| 130: | center pin | 140: | cap assembly |
| 141: | upper cap | 141a: | base layer |
| 141b: | nickel-phosphorus alloy plating layer | | |
| 142: | safety vent | | |
| 143: | first insulating member | 144: | lower cap |
| 148: | gasket | 200: | bus bar wire |
| 210: | bus bar | 1000: | battery module |

## Claims

1. A rechargeable battery (100) comprising:
a case (110) having an internal space;
a cap assembly (140) coupled to the case (110), the cap assembly (140) comprising an upper cap (141); and
an electrode assembly (120) positioned in the internal space of the case (110),
wherein the upper cap (141) comprises a base layer (141a) and a nickel-phosphorus alloy plating layer (141b) on the base layer (141a), and
wherein a phosphorus content in the nickel-phosphorus alloy plating layer (141b) is 6 wt% to 14 wt%.

2. The rechargeable battery (100) as claimed in claim 1, wherein the phosphorus content in the nickel-phosphorus alloy plating layer (141b) is 8 wt% to 12 wt%.

3. The rechargeable battery (100) as claimed in claim 1 or 2, wherein a hardness of the nickel-phosphorus alloy plating layer (141b) is 400 to 450.

4. The rechargeable battery (100) as claimed in one of claims 1 to 3,
wherein the base layer (141a) comprises steel; and/or
wherein the nickel-phosphorus alloy plating layer (141b) is formed by electroless plating.

5. The rechargeable battery (100) as claimed in one of claims 1 to 4,
wherein the nickel-phosphorus alloy plating layer (141b) comprises nickel with an amorphous structure; and/or
wherein the rechargeable battery (100) is cylindrical.

6. A battery module (1000) comprising:
a plurality of rechargeable batteries (100); and
a bus bar (210) electrically connected to each of the rechargeable batteries (100),
wherein each of the rechargeable batteries (100) comprises a cap assembly (140) connected to the bus bar (210),
wherein each of the cap assemblies (140) comprises an upper cap (141) connected to the bus bar (210),
wherein each of the upper caps (141) comprises a base layer (141a) and a nickel-phosphorus alloy plating layer (141b) on the base layer (141a), and
wherein a phosphorus content in each of the nickel-phosphorus alloy plating layers (141b) is 6 wt% to 14 wt%.

7. The battery module (1000) as claimed in claim 6, wherein the phosphorus content in each of the nickel-phosphorus alloy plating layers (141b) is 8 wt% to 12 wt%.

8. The battery module (1000) as claimed in claim 6 or 7, wherein a hardness of each of the nickel-phosphorus alloy plating layers (141b) is 400 to 450.

9. The battery module (1000) as claimed in one of claims 6 to 8, wherein the bus bar (210) comprises copper-tin alloy; and/or wherein each of the base layers (141a) comprises steel.

10. The battery module (1000) as claimed in one of claims 6 to 9, wherein each of the nickel-phosphorus alloy plating layers (141b) is formed by electroless plating.

11. The battery module (1000) as claimed in one of claims 6 to 10, wherein each of the nickel-phosphorus alloy plating layers (141b) comprises nickel with an amorphous structure.

12. The battery module (1000) as claimed in one of claims 6 to 11, wherein the bus bar (210) and the cap assemblies (140) are connected by resistance welding.

13. The battery module (1000) as claimed in one of claims 6 to 12, wherein each of the rechargeable batteries (100) comprises:
a case (110) having an internal space and connected to the cap assembly (140); and
an electrode assembly (120) positioned in the internal space, and
wherein the cap assembly (140) further comprises a lower cap (144) electrically connected to the electrode assembly (120).

14. The battery module (1000) as claimed in one of claims 6 to 13, wherein the rechargeable batteries (100) are cylindrical.

15. An electric device comprising the battery module (1000) as claimed in one of claims 6 to 14.
